# FASCICULE DE BREVET EUROPEEN

(11) **EP 3 404 822 B1**
(45) Date de publication et mention de la délivrance du brevet: **27.09.2023**
(21) Numéro de dépôt: 18172531.8
(22) Date de dépôt: 16.05.2018
(51) Int. Cl.: H02P 1/16, F02N 11/04, F02N 11/08

(54) **ENSEMBLE DE DÉMARRAGE D'UN MOTEUR ET PROCÉDÉ DE DÉMARRAGE**
ANLASSEREINHEIT EINES MOTORS, UND ANLASSVERFAHREN
ASSEMBLY FOR STARTING AN ENGINE, AND STARTING METHOD

(30) Priorité: 18.05.2017 FR 1700526
(43) Date de publication de la demande: 21.11.2018
(73) Titulaire: THALES, 92400 Courbevoie (FR)
(72) Inventeur: DAL, Arnaud, 78400 CHATOU (FR); LE GUERROUÉ, Eric, 78400 CHATOU (FR); TAKORABET, Azeddine, 78400 CHATOU (FR); MAALOUF, Amira, 78400 CHATOU (FR)
(74) Mandataire: Atout PI Laplace

(56) Documents cités:
- EP-A1- 2 602 929
- CN-A- 104 820 184
- DE-A1-102012 103 245
- US-A- 4 639 645
- US-A- 5 146 172
- US-A1- 2011 042 969

## Description

L'invention concerne un ensemble de démarrage d'un moteur ou d'un moteur auxiliaire de puissance dans un aéronef. L'invention concerne également un procédé de démarrage d'un moteur mettant en oeuvre un tel ensemble de démarrage.

Une génératrice-démarreur, aussi connue sous l'abréviation S/G pour son acronyme anglo-saxon « Starter-Generator », est utilisée comme démarreur pour le démarrage par exemple des turboréacteurs, turbopropulseurs, turbomoteurs d'usage aéronautique et comme générateur principal du réseau électrique de bord des avions, des hélicoptères et des drones.

La génératrice-démarreur est une machine électrique qui fonctionne en mode démarreur pour démarrer le moteur, puis en mode génératrice pour fournir la puissance électrique nécessaire au réseau de bord ou tout autre système nécessitant une puissance électrique. La machine électrique peut être à aimants permanents ou à rotor bobiné. La machine électrique est à rotor bobiné, elle peut inclure un étage d'excitation DC ou AC monophasée ou triphasée, sans balais avec redresseur tournant au rotor, ou elle peut être excitée par un système bague-balais pour alimenter le rotor principal.

Une génératrice-démarreur du type machine électrique synchrone comprend une machine principale comprenant un rotor principal et un stator principal en communication électromagnétique l'un avec l'autre. Le rotor principal comprend au moins un enroulement rotorique et le stator principal comprend un enroulement statorique polyphasé. L'enroulement statorique polyphasé comprend plusieurs enroulements de phase statoriques décalés angulairement de sorte à délivrer une tension alternative polyphasée. L'enroulement statorique et l'enroulement rotorique sont couplés magnétiquement. Les génératrices-démarreurs synchrones sans balais comprennent une excitatrice comprenant un stator d'excitatrice comprenant un enroulement statorique d'excitatrice et un rotor d'excitatrice comprenant un enroulement polyphasé relié électriquement à l'enroulement rotorique de la machine principale au moyen d'un pont redresseur tournant. Les rotors de la machine principale et de l'excitatrice sont montés sur un arbre commun destiné à être couplé à l'arbre d'un moteur.

Lorsque la génératrice-démarreur fonctionne en mode démarreur, un courant alternatif est injecté dans un enroulement statorique de l'excitatrice. Ce courant alternatif induit par effet transformateur un courant alternatif dans le rotor de l'excitatrice. Le courant alternatif induit est redressé par le pont redresseur tournant et le courant continu ainsi obtenu est injecté dans l'enroulement rotorique de la machine principale ce qui génère un champ magnétique dans la machine principale. L'enroulement statorique polyphasé de la machine principale est alimenté en courant alternatif polyphasé à fréquence variable. Ce courant produit un champ magnétique tournant dans le stator principal. L'interaction entre le champ magnétique créé par l'enroulement du rotor et le champ tournant créé par les enroulements du stator crée un couple électromagnétique moteur. Le rotor principal et l'arbre sont alors entraînés en rotation et entraînent l'arbre du moteur en rotation.

Par ailleurs, la machine électrique est polyphasée : elle est généralement triphasée, mais peut être hexaphasée. L'invention peut s'étendre à toute machine électrique AC.

Dans cette demande, nous nous intéressons au mode démarreur de la génératrice-démarreur. Nous présentons l'invention avec l'exemple d'une génératrice-démarreur mais de manière plus générale, l'invention s'applique à tout démarreur, sans nécessité de génération de courant après la phase de démarrage.

On peut définir une phase de démarrage par une phase pendant laquelle la génératrice-démarreur fonctionne en mode démarreur. Le début de la phase de démarrage est initié par la fermeture d'un contacteur de démarrage. La fin de la phase de démarrage est atteinte lorsque le moteur atteint la vitesse de fin de démarrage. Ensuite débute la phase de génération : la génératrice-démarreur fonctionne en mode génératrice, comme générateur principal des réseaux électriques de bord.

Pour réaliser la fonction de démarrage, on utilise un dispositif électronique de démarrage, appelée SBU pour son acronyme anglo-saxon Start Box Unit, pour piloter et alimenter la génératrice-démarreur pendant le démarrage. Le dispositif électronique de démarrage est un générateur de puissance ayant pour fonction de démarrer via la génératrice-démarreur par exemple un groupe auxiliaire de puissance, la SBU étant alimentée par une batterie de 28V DC, et de démarrer les moteurs principaux, la SBU étant alimentée par un réseau de 115V AC.

Il existe différentes techniques de pilotage pendant le démarrage. Les techniques les plus usuelles sont le contrôle en couple et le pilotage en vitesse. Il est possible de faire une association des deux techniques, par exemple avec un pilotage en vitesse qui est suivi par un contrôle en couple au-delà d'un certain point de fonctionnement, ou inversement.

Les documents US 2011/0042969 et DE 10 2012 103245 décrivent des systèmes de démarrage d'un moteur connus de l'art antérieur.

La technique du contrôle en couple fonctionne en boucle ouverte. Il n'y a en effet généralement pas la possibilité d'installer un couple-mètre dans la chaîne de démarrage. L'ensemble constitué par le dispositif électronique de démarrage et la génératrice-démarreur génère alors un couple à partir de modèles électromagnétiques de la machine électrique ou de tables de courants en fonction de la vitesse de la génératrice-démarreur, et des mesures effectuées par le dispositif électronique de démarrage, telles que la mesure des courants fournis par le dispositif électronique de démarrage, la mesure ou l'estimation de la position du rotor de la génératrice-démarreur.

Différents paramètres peuvent influer sur la précision du couple délivré par l'ensemble constitué par le dispositif électronique de démarrage et la génératrice-démarreur. On peut citer par exemple les paramètres issus de l'électronique : la tolérance sur la mesure des courants de la machine électrique, la tolérance sur les mesures de tensions, la tolérance sur la mesure ou l'estimation de la position du rotor de la machine électrique, la tolérance sur les courants et les tensions générés par le dispositif électronique de démarrage, .... On peut également citer les paramètres issus de la machine électrique : la tolérance sur les inductances synchrones sur les axes d et q en coordonnées de Park, la tolérance sur la mutuelle inductance de l'étage principal de la machine, la tolérance sur le gain de l'excitation rotorique dans le cas d'une machine à rotor bobiné avec excitatrice, la tolérance sur la mutuelle inductance de l'étage d'excitation, les tolérances sur les impédances du rotor et du stator de l'étage principal, les tolérances sur les impédances de l'étage d'excitation, les tolérances sur les caractéristiques des aimants permanents dans le cas d'une machine à aimants permanents, les tolérances sur la perméabilité magnétique des tôles des différents circuits magnétiques (rotor et stator de l'étage principal et de l'excitatrice), les tolérances sur les entrefers de l'étage principal et de l'excitatrice, les tolérances sur la longueur des paquets de fer des rotor et stator, les tolérances sur les coefficients de foisonnement des paquets de tôles des rotor et stator, les tolérances sur les épaisseurs de tôles, les tolérances sur les dimensions des aimants permanents dans le cas d'une machine à aimants permanents, etc.

Ainsi, on peut noter que la précision du couple délivré par l'ensemble constitué par le dispositif électronique de démarrage et la génératrice-démarreur peut être impactée par de nombreux paramètres et donner lieu à des dispersions qui sont essentiellement mais pas limitativement d'origine électrique, mécanique et/ou magnétique.

Pour assurer le succès du démarrage, l'ensemble constitué par le dispositif électronique de démarrage et la génératrice-démarreur doit délivrer un couple minimum requis noté Cmin. Généralement, il doit suivre un profil de couple en fonction de la vitesse de la génératrice-démarreur.

Pour garantir la fourniture du couple minimum Cmin requis pour le démarrage du moteur, l'ensemble constitué par le dispositif électronique de démarrage et la génératrice-démarreur utilise comme référence de couple un couple de référence noté Cref correspondant au couple minimum requis Cmin multiplié par un certain gain afin de compenser les dispersions possibles. Ainsi, si on estime la tolérance possible de variation de couple due à l'électronique = +/- a, et celle due à la machine à +/- b, il faut en théorie augmenter le couple de référence Cref d'un coefficient multiplicateur de 1 +a+b. On obtient alors Cref= Cmin x (1+a+b). Ceci permet de garantir que dans la configuration la plus défavorable en termes de dispersions, le couple fourni est toujours supérieur au couple minimum requis Cmin, condition nécessaire au succès du démarrage.

Néanmoins, en procédant ainsi, il en résulte un surdimensionnement des équipements. Ce surdimensionnement a un impact sur le coût, la masse et le volume de l'ensemble embarqué dans l'aéronef. Comme la puissance prélevée sur le réseau de bord et la puissance de l'ensemble constitué par le dispositif électronique de démarrage et la génératrice-démarreur dépendent de a et b, il y a donc un intérêt évident à réduire le plus possible a et b afin de ne pas surdimensionner les équipements.

L'invention vise à pallier tout ou partie des problèmes cités plus haut en proposant un ensemble de démarrage permettant une caractérisation des dispersions qui influent sur le couple délivré par l'ensemble constitué par le dispositif électronique de démarrage et la génératrice-démarreur permettant un meilleur dimensionnement de cet ensemble, et d'assurer ainsi le couple minimum requis pour le démarrage sans surdimensionner les équipements.

A cet effet, l'invention a pour objet un ensemble de démarrage d'un moteur tel que défini par la revendication indépendante annexée 1.

Selon un mode de réalisation, le dispositif de caractérisation des dispersions du démarreur comprend un moyen de mémorisation d'un indicateur des dispersions, et le dispositif électronique de démarrage comprend un moyen de lecture de l'indicateur des dispersions.

Avantageusement, l'indicateur des dispersions du moyen de mémorisation est une valeur définie préalablement à une utilisation de l'ensemble de démarrage.

Selon un autre mode de réalisation, le dispositif de caractérisation des dispersions du démarreur est un dispositif analogique passif.

Selon un autre mode de réalisation, le moyen de mémorisation d'un indicateur des dispersions est un conducteur ohmique, et l'indicateur des dispersions est une valeur de résistance.

Selon un autre mode de réalisation, les dispersions du démarreur étant préalablement estimées et/ou mesurées, l'indicateur des dispersions est prédéfini en correspondance avec les dispersions estimées et/ou mesurées du démarreur.

Avantageusement, le dispositif de caractérisation des dispersions du démarreur est un dispositif numérique.

L'invention concerne aussi un aéronef comprenant un tel ensemble de démarrage, le moteur étant un moteur de propulsion de l'aéronef et/ou un moteur auxiliaire de puissance de l'aéronef.

L'invention concerne aussi un procédé de démarrage d'un moteur tel que défini par la revendication indépendante annexée 8.

Selon un mode de réalisation, le procédé comprend au préalable les étapes suivantes réalisées une seule fois :
- estimation et/ou mesure des dispersions du démarreur,
- prédéfinition de l'indicateur des dispersions en correspondance avec les dispersions estimées et/ou mesurées du démarreur.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un ensemble de démarrage d'un moteur selon l'invention ;
- la figure 2 représente un mode de réalisation d'un ensemble de démarrage selon l'invention ;
- la figure 3 illustre schématiquement les étapes d'un procédé de démarrage selon l'invention ;
- la figure 4 représente schématiquement un aéronef comprenant un ensemble de démarrage selon l'invention.

Par souci de clarté, les mêmes éléments porteront les mêmes repères dans les différentes figures. Il est à noter que l'invention s'applique à tout type de génératrice-démarreur, qu'elle soit à aimants permanents ou à rotor bobiné muni d'un système bagues-balais à excitation DC ou sans balais à excitation AC monophasée ou triphasée, ou plus généralement polyphasée. L'invention est présentée avec l'exemple d'une génératrice-démarreur mais elle s'applique à tout type de démarreur synchrone ou asynchrone non nécessairement générateur de courant.

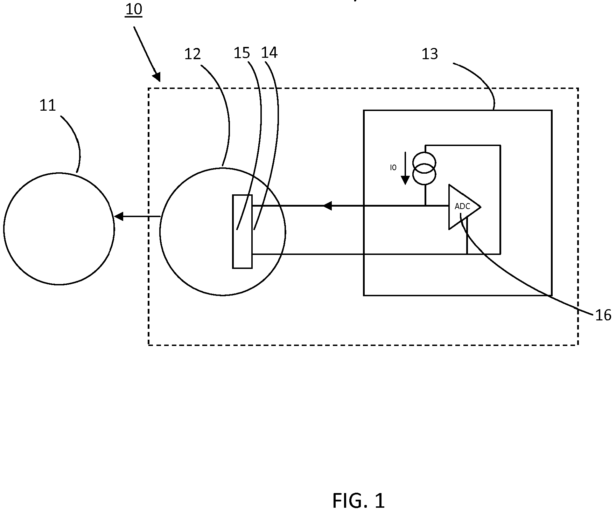

La **figure 1** représente un ensemble de démarrage 10 d'un moteur 11 selon l'invention. L'ensemble de démarrage 10 du moteur 11 comprend un démarreur 12, par exemple une génératrice-démarreur, destiné à fournir un couple de démarrage requis au moteur 11 pour démarrer le moteur 11 lors d'une phase de démarrage, le démarreur 12 étant soumis à des dispersions faisant varier la valeur du couple fourni. L'ensemble de démarrage 10 du moteur 11 comprend un dispositif électronique de démarrage 13 relié au démarreur 12 et destiné à fournir un courant électrique au démarreur 12 pour l'alimenter électriquement lors de la phase de démarrage. Selon l'invention, le démarreur 12 comprend un dispositif de caractérisation 14 des dispersions du démarreur 12, et le dispositif électronique de démarrage 13 est configuré pour coopérer avec le dispositif de caractérisation 14 des dispersions du démarreur 12 de façon à déterminer les dispersions du démarreur 12. Enfin, le dispositif électronique de démarrage 13 est configuré pour ajuster le courant électrique fourni au démarreur 12 en fonction des dispersions déterminées pour compenser les dispersions du démarreur 12, de façon à ce que le démarreur 12 fournisse le couple de démarrage requis au moteur 11. Le couple de démarrage requis est un couple de démarrage fixe qui correspond au couple minimum à fournir par le démarreur pour assurer le démarrage du moteur.

Le dispositif de caractérisation 14 des dispersions du démarreur 12 comprend un moyen de mémorisation 15 d'un indicateur des dispersions, et le dispositif électronique de démarrage 13 comprend un moyen de lecture 16 de l'indicateur des dispersions.

L'indicateur des dispersions du moyen de mémorisation 15 peut être une valeur définie préalablement à une utilisation de l'ensemble de démarrage 10, par exemple + 5% ou - 10% ou - 12Nm.

Autrement dit, l'invention permet de regrouper toutes les dispersions de construction du démarreur dans un dispositif de caractérisation de celui-ci et s'en servir pour pouvoir les compenser par le courant lors du démarrage du moteur. Cela permet d'atteindre le couple de démarrage minimum spécifié dans tous les cas de figure. Le courant peut être fourni par un onduleur. L'onduleur est dimensionné de tel sorte à pourvoir fournir le courant nécessaire pour compenser le déficit de couple du démarreur le moins performant. Cela permet de s'affranchir d'un surdimensionnement (masse) du démarreur pour garantir l'exigence de couple, d'une part, et de réduire les dispersions de couple fourni d'autre part.

L'ensemble de démarrage selon l'invention permet à l'ensemble démarreur et onduleur de fournir un couple minimum spécifié fixe, indépendamment de l'état thermique et ceci dans un but de minimiser la masse du démarreur. En d'autres termes, l'invention permet de réaliser un couple donné fixe quelles que soient les dispersions de construction du démarreur lui-même, en dehors des aspects thermiques du moteur à démarrer et de l'électronique associée.

Selon l'invention, les modèles et paramètres du démarreur sont déterminés par calcul et les modèles sont établis dans l'onduleur, et ce ne sont que les incertitudes de construction du démarreur, y compris la précision du codeur de la position, qui sont regroupés dans une seule donnée « valeur » traitée par l'onduleur ultérieurement. Sur un avion, l'onduleur peut être associé à n'importe quel démarreur. C'est d'ailleurs le cas sur avion, le même onduleur sert à commander les deux démarreurs des deux moteurs ayant des dispersions différentes.

Selon le mode de réalisation considéré, le dispositif de caractérisation 14 des dispersions du démarreur 12 peut être un dispositif analogique passif ou un dispositif numérique. Dans le cas où le dispositif de caractérisation 14 des dispersions du démarreur 12 est un dispositif numérique, il peut s'agir par exemple d'une mémoire ROM, d'une mémoire flash, d'un disque SSD, d'une puce RFID ou tout autre support apte à mémoriser un indicateur de dispersions. Le dispositif électronique de démarrage 13 est alors configuré pour coopérer avec le dispositif de caractérisation 14 des dispersions du démarreur 12 de façon à déterminer les dispersions du démarreur 12. Autrement dit, le dispositif de démarrage 13 comprend alors un dispositif de lecture apte à lire l'indicateur de dispersions sur le dispositif de caractérisation 14. Une fois l'indicateur de dispersions lu par le dispositif électronique de démarrage 13, le dispositif électronique de démarrage 13 est alors en mesure d'ajuster le courant électrique fourni au démarreur 12 en fonction des dispersions pour compenser les dispersions du démarreur 12. Ainsi le démarreur 12 fournit le couple de démarrage requis au moteur 11. Autrement dit, le démarreur 12 est ainsi apte à fournir au moteur 11 un couple de démarrage au moins égal au couple minimum nécessité pour assurer le démarrage du moteur 11. Lors du démarrage, l'onduleur lit la valeur de la dispersion et détermine le courant par un facteur correctif associé à la valeur lue de dispersion dans le but de garantir le couple minimum spécifié. Il en résulte une bonne modularité dans la combinaison d'un moteur et d'un onduleur. Il est possible de changer l'onduleur sans devoir y associer d'autres données supplémentaires puisque l'onduleur ne fait que lire la valeur de la dispersion.

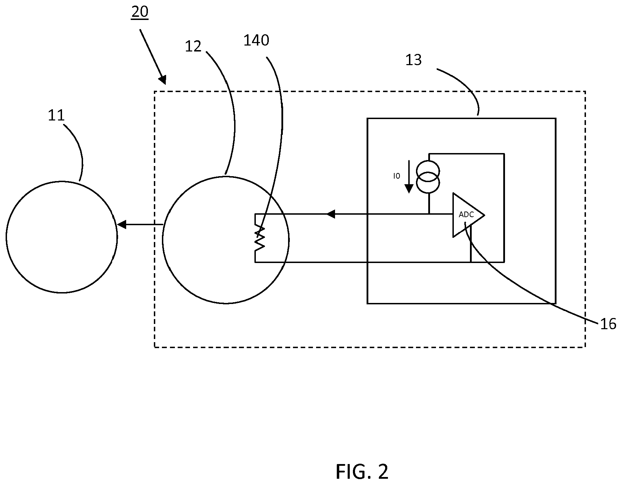

La **figure 2** représente un mode particulier de réalisation d'un ensemble de démarrage 20 selon l'invention. L'ensemble de démarrage 20 du moteur 11 représenté sur la figure 2 comprend les mêmes éléments que l'ensemble de démarrage 10 représenté sur la figure 1. La différence réside dans le dispositif de caractérisation des dispersions du démarreur 12. Sur la figure 2, le dispositif de caractérisation 140 des dispersions du démarreur est un dispositif analogique passif. Plus précisément, le moyen de mémorisation de l'indicateur des dispersions est un conducteur ohmique, et l'indicateur des dispersions est une valeur de résistance. Les dispersions du démarreur 12 sont préalablement estimées et/ou mesurées, et l'indicateur des dispersions est prédéfini en correspondance avec les dispersions estimées et/ou mesurées du démarreur 12. Pendant le processus de fabrication du démarreur 12, par exemple d'une génératrice-démarreur, des essais sont réalisés pour identifier les paramètres influant sur le couple fourni par le démarreur 12. Il est alors possible, en fonction des paramètres de fonctionnement prévus pour le démarreur 12 tels que les différentes tolérances sur les impédances du rotor et du stator, etc., d'estimer les dispersions que le démarreur 12 aura en utilisation. Les dispersions peuvent aussi être estimées à l'aide de formules empiriques connues du fabricant du démarreur, en prenant en compte les paramètres de fonctionnement prévus pour le démarreur. Aussi, les dispersions du démarreur peuvent être déterminées conjointement par mesures et estimations.

Les dispersions estimées et/ou mesurées sont ensuite stockées dans le dispositif de caractérisation 140 par le biais d'un indicateur des dispersions.

Dans le mode de réalisation de la figure 2, un conducteur ohmique est intégré au démarreur 12. Ce conducteur ohmique a une certaine résistance choisie en correspondance avec les dispersions estimées et/ou mesurées préalablement à une utilisation du démarreur 12. Par exemple, pour une dispersion estimée à -6%, la résistance peut par exemple avoir une valeur de 1 kΩ (kilo-ohm). Le dispositif électronique de démarrage 13, configuré pour coopérer avec le dispositif de caractérisation 14 des dispersions du démarreur 12, lit la valeur de la résistance et comprend qu'il lui faut fournir un courant adapté pour compenser les 6% de dispersions du démarreur 12 afin que le démarreur, malgré ses 6% de dispersions, puisse fournir le couple minimal nécessaire au démarrage du moteur 11.

En procédant selon le principe de l'invention, on est assuré que le démarreur délivre le couple requis au démarrage du moteur, malgré les dispersions du démarreur. Comparé à l'art antérieur et comme expliqué précédemment, il n'est donc plus nécessaire d'utiliser comme référence de couple un couple de référence Cref correspondant au couple minimum requis Cmin multiplié par un gain afin de compenser les dispersions possibles. L'invention permet donc un gain en termes de coût, de masse et de volume puisque les équipements tels que le démarreur, le dispositif électronique de démarrage, l'ensemble des câbles, ne sont plus surdimensionnés par rapport à leur taille nécessaire au bon fonctionnement du démarreur lors du démarrage.

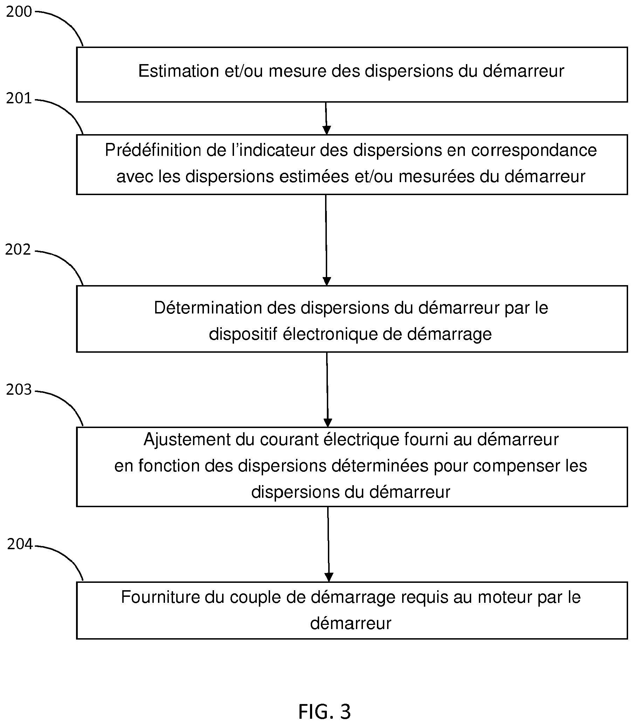

La **figure 3** illustre schématiquement les étapes d'un procédé de démarrage selon l'invention. Le procédé selon l'invention comprend une étape 202 de détermination des dispersions du démarreur 12 par le dispositif électronique de démarrage 13. Puis le procédé comprend une étape 203 d'ajustement du courant électrique fourni au démarreur 12 en fonction des dispersions déterminées pour compenser les dispersions du démarreur 12. Enfin, le procédé selon l'invention comprend une étape 204 de fourniture du couple de démarrage requis au moteur 11 par le démarreur 12 pour le démarrage du moteur 11. Grâce au procédé selon l'invention, le démarreur 12 fournit de manière sûre et certaine le couple minimal nécessité pour le démarrage du moteur 11 puisque le dispositif électronique de démarrage 13 est informé des dispersions du démarreur 12 et fournit le courant électrique adapté au démarreur 12 pour que celui-ci fournisse le couple mécanique adapté.

Le procédé de démarrage d'un moteur 11 comprend au préalable les étapes 200 et 201 réalisées une seule fois. Pendant la fabrication du démarreur 12 ont lieu l'étape 200 d'estimation et/ou de mesure des dispersions du démarreur 12, et l'étape 201 de prédéfinition de l'indicateur des dispersions en correspondance avec les dispersions estimées et/ou mesurées du démarreur 12.

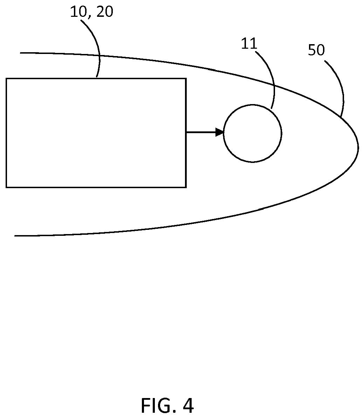

La **figure 4** représente schématiquement un aéronef 50 comprenant un ensemble de démarrage 10, 20 selon l'invention. L'aéronef 50 comprend un ensemble de démarrage 10, 20 tel que décrit précédemment. Le moteur 11 est un moteur de propulsion de l'aéronef 50 et/ou un moteur auxiliaire de puissance de l'aéronef 50.

## Revendications

1. Ensemble de démarrage (10, 20) d'un moteur (11) comprenant :
• un démarreur (12) destiné à fournir un couple de démarrage requis au moteur (11) pour démarrer le moteur (11) lors d'une phase de démarrage, le démarreur (12) étant soumis à des dispersions de construction faisant varier la valeur du couple fourni,
• un dispositif électronique de démarrage (13) relié au démarreur (12) et destiné à fournir un courant électrique au démarreur (12) pour l'alimenter électriquement lors de la phase de démarrage,
**caractérisé en ce que** le démarreur (12) comprend un dispositif de caractérisation (14) des dispersions estimées et/ou mesurées du démarreur (12) comprenant un moyen de mémorisation (15) d'un indicateur des dispersions, l'indicateur des dispersions étant prédéfini en correspondance avec les dispersions estimées et/ou mesurées,
**en ce que** le dispositif électronique de démarrage (13) comprend un moyen de lecture (16) de l'indicateur des dispersions et est configuré pour lire l'indicateur des dispersions de façon à déterminer les dispersions du démarreur (12),
et **en ce que** le dispositif électronique de démarrage (13) est configuré pour fournir le courant électrique au démarreur (12) déterminé par un facteur correctif associé à l'indicateur des dispersions lu, pour compenser les dispersions de construction du démarreur (12), de façon à ce que le démarreur (12) fournisse le couple de démarrage requis au moteur (11).

2. Ensemble de démarrage (10, 20) selon la revendication 1, **caractérisé en ce que** l'indicateur des dispersions du moyen de mémorisation (15) est une valeur définie préalablement à une utilisation de l'ensemble de démarrage (10, 20).

3. Ensemble de démarrage (10, 20) selon l'une quelconque des revendications 1 ou 2, **caractérisé en ce que** le dispositif de caractérisation (14) des dispersions du démarreur (12) est un dispositif analogique passif.

4. Ensemble de démarrage (20) selon l'une quelconque des revendications 1 à 3, **caractérisé en ce que** le moyen de mémorisation (15) d'un indicateur des dispersions est un conducteur ohmique (140), et **en ce que** l'indicateur des dispersions est une valeur de résistance.

5. Ensemble de démarrage (10, 20) selon l'une quelconque des revendications 1 à 4, les dispersions du démarreur (12) étant préalablement estimées et/ou mesurées, **caractérisé en ce que** l'indicateur des dispersions est prédéfini en correspondance avec les dispersions estimées et/ou mesurées du démarreur (12).

6. Ensemble de démarrage (10) selon l'une quelconque des revendications 1 ou 2, **caractérisé en ce que** le dispositif de caractérisation (14) des dispersions du démarreur (12) est un dispositif numérique.

7. Aéronef (50) **caractérisé en ce qu'**il comprend un ensemble de démarrage (10, 20) selon l'une des revendications précédentes, **en ce que** le moteur (11) est un moteur de propulsion de l'aéronef (50) et/ou un moteur auxiliaire de puissance de l'aéronef (50).

8. Procédé de démarrage d'un moteur mettant en oeuvre un ensemble de démarrage (10, 20) comprenant :
- un démarreur (12) destiné à fournir un couple de démarrage requis au moteur (11) pour démarrer le moteur (11) lors d'une phase de démarrage, le démarreur (12) étant soumis à des dispersions de construction faisant varier la valeur du couple fourni,
- un dispositif électronique de démarrage (13) relié au démarreur (12) et destiné à fournir un courant électrique au démarreur (12) pour l'alimenter électriquement lors de la phase de démarrage,
le démarreur (12) comprenant un dispositif de caractérisation (14) des dispersions du démarreur (12) comprenant un moyen de mémorisation (15) d'un indicateur de dispersions,
le dispositif électronique de démarrage (13) comprenant un moyen de lecture (16) de l'indicateur des dispersions et étant configuré pour lire l'indicateur des dispersions de façon à déterminer les dispersions du démarreur (12), **caractérisé en ce que** ledit procédé comprend les étapes suivantes :
• détermination des dispersions estimées et/ou mesurées du démarreur (12) par le dispositif électronique de démarrage (13), (étape 202)
• mémoriser un indicateur des dispersions, l'indicateur des dispersions étant prédéfini en correspondance avec les dispersions estimées et/ou mesurées 2. ajustement du courant électrique fourni au démarreur (12) en fonction des dispersions déterminées pour compenser les dispersions du démarreur (12), (étape 203)
• fourniture du couple de démarrage requis au moteur (11) pour le démarrage du moteur (11) par le démarreur (12), (étape 204).

9. Procédé de démarrage d'un moteur selon la revendication 8 mettant en oeuvre un ensemble de démarrage (10, 20) selon l'une des revendications 2 à 6, **caractérisé en ce qu'**il comprend au préalable l'étape suivante réalisée une seule fois :
• prédéfinition de l'indicateur des dispersions en correspondance avec les dispersions estimées et/ou mesurées du démarreur (12), (étape 201).

## Patentansprüche

1. Anlasseranordnung (10, 20) eines Motors (11), die Folgendes umfasst:
• einen Anlasser (12) mit der Aufgabe, dem Motor (11) ein erforderliches Anlassdrehmoment zuzuführen, um den Motor (11) in einer Anlassphase anzulassen, wobei der Anlasser (12) konstruktionsbedingten Schwankungen unterliegt, die den Wert des zugeführten Drehmoments variieren,
• eine elektronische Anlassvorrichtung (13), die mit dem Anlasser (12) verbunden ist und die Aufgabe hat, dem Anlasser (12) einen elektrischen Strom zuzuführen, um ihn in der Anlassphase elektrisch zu versorgen,
**dadurch gekennzeichnet, dass** der Anlasser (12) eine Vorrichtung (14) zur Charakterisierung der geschätzten und/oder gemessenen Schwankungen des Anlassers (12) umfasst, die ein Mittel (15) zur Speicherung eines Schwankungsindikators umfasst, wobei der Schwankungsindikator in Übereinstimmung mit den geschätzten und/oder gemessenen Schwankungen vordefiniert ist,
dadurch, dass die elektronische Anlassvorrichtung (13) ein Mittel (16) zum Lesen des Schwankungsindikators umfasst und zum Lesen des Schwankungsindikators konfiguriert ist, um die Schwankungen des Anlassers (12) zu ermitteln,
und dadurch, dass die elektronische Anlassvorrichtung (13) zum Zuführen des elektrischen Stroms zum Anlasser (12) konfiguriert ist, ermittelt anhand eines mit dem gelesenen Schwankungsindikator assoziierten Korrekturfaktors, um die konstruktionsbedingten Schwankungen des Anlassers (12) zu kompensieren, so dass der Anlasser (12) dem Motor (11) das erforderliche Anlassdrehmoment zuführt.

2. Anlasseranordnung (10, 20) nach Anspruch 1, **dadurch gekennzeichnet, dass** der Schwankungsindikator des Speichermittels (15) ein vor einer Verwendung der Anlasseranordnung (10, 20) definierter Wert ist.

3. Anlasseranordnung (10, 20) nach Anspruch 1 oder 2, **dadurch gekennzeichnet, dass** die Vorrichtung (14) zur Charakterisierung der Schwankungen des Anlassers (12) eine passive analoge Vorrichtung ist.

4. Anlasseranordnung (20) nach einem der Ansprüche 1 bis 3, **dadurch gekennzeichnet, dass** das Mittel (15) zur Speicherung eines Schwankungsindikators ein ohmscher Leiter (140) ist, und dadurch, dass der Schwankungsindikator ein Widerstandswert ist.

5. Anlasseranordnung (10, 20) nach einem der Ansprüche 1 bis 4, wobei die Schwankungen des Anlassers (12) vorab geschätzt und/oder gemessen werden, **dadurch gekennzeichnet, dass** der Schwankungsindikator in Übereinstimmung mit den geschätzten und/oder gemessenen Schwankungen des Anlassers (12) vordefiniert ist.

6. Anlasseranordnung (10) nach einem der Ansprüche 1 oder 2, **dadurch gekennzeichnet, dass** die Vorrichtung (14) zur Charakterisierung der Schwankungen des Anlassers (12) eine digitale Vorrichtung ist.

7. Luftfahrzeug (50), **dadurch gekennzeichnet, dass** es eine Anlasseranordnung (10, 20) nach einem der vorhergehenden Ansprüche umfasst, dadurch, dass der Motor (11) ein Triebwerk des Luftfahrzeugs (50) und/oder ein Hilfstriebwerk des Luftfahrzeugs (50) ist.

8. Verfahren zum Anlassen eines Motors unter Verwendung einer Anlasseranordnung (10, 20), das Folgendes umfasst:
- einen Anlasser (12) mit der Aufgabe, dem Motor (11) ein erforderliches Anlassdrehmoment zuzuführen, um den Motor (11) in einer Anlassphase anzulassen, wobei der Anlasser (12) konstruktionsbedingten Schwankungen unterliegt, die den Wert des zugeführten Drehmoments variieren,
- eine elektronische Anlassvorrichtung (13), die mit dem Anlasser (12) verbunden ist und die Aufgabe hat, dem Anlasser (12) einen elektrischen Strom zuzuführen, um ihn in der Anlassphase elektrisch zu versorgen,
wobei der Anlasser (12) eine Vorrichtung (14) zur Charakterisierung der Schwankungen des Anlassers (12) umfasst, die ein Mittel (15) zur Speicherung eines Schwankungsindikators umfasst,
wobei die elektronische Anlassvorrichtung (13) ein Mittel (16) zum Lesen des Schwankungsindikators umfasst und zum Lesen des Schwankungsindikators konfiguriert ist, um die Schwankungen des Starters (12) zu ermitteln, **dadurch gekennzeichnet, dass** das Verfahren die folgenden Schritte umfasst:
• Ermitteln der geschätzten und/oder gemessenen Schwankungen des Anlassers (12) durch die elektronische Anlassvorrichtung (13), (Schritt 202)
• Speichern eines Schwankungsindikators, wobei der Schwankungsindikator in Übereinstimmung mit den geschätzten und/oder gemessenen Schwankungen vordefiniert wird,
• Justieren des dem Anlasser (12) zugeführten elektrischen Stroms in Abhängigkeit von den ermittelten Schwankungen, um die Schwankungen des Anlassers (12) zu kompensieren (Schritt 203)
• Zuführen des erforderlichen Startmoments zu dem Motor (11) zum Anlassen des Motors (11) durch den Anlasser (12) (Schritt 204).

9. Verfahren zum Anlassen eines Motors nach Anspruch 8 unter Verwendung einer Anlasseranordnung (10, 20) nach einem der Ansprüche 2 bis 6, **dadurch gekennzeichnet, dass** es zuvor den folgenden nur einmal durchgeführten Schritt umfasst:
• Vordefinieren des Schwankungsindikators in Übereinstimmung mit den geschätzten und/oder gemessenen Schwankungen des Anlassers (12) (Schritt 201).

## Claims

1. A starting assembly (10, 20) for starting an engine (11) comprising:
• a starter (12) intended to supply a required starting torque to the engine (11) to start the engine (11) in a starting phase, the starter (12) being subject to construction dispersions that vary the value of the torque supplied,
• an electronic starting device (13) linked to the starter (12) and intended to supply an electrical current to the starter (12) to electrically power it in the starting phase,
**characterised in that** the starter (12) comprises a device (14) for characterising the estimated and/or measured dispersions of the starter (12) comprising a means (15) for storing a dispersion indicator, the dispersion indicator being predefined in conformity with the estimated and/or measured dispersions,
**in that** the electronic starting device (13) comprises a means (16) for reading the dispersion indicator and is configured to read the dispersion indicator so as to determine the dispersions of the starter (12),
and **in that** the electronic starting device (13) is configured to supply the electrical current to the starter (12) determined by a corrective factor associated with the dispersion indicator read to compensate for the construction dispersions of the starter (12), so that the starter (12) supplies the required starting torque to the engine (11).

2. The starting assembly (10, 20) according to claim 1, **characterised in that** the dispersion indicator of the storage means (15) is a value defined prior to a use of the starting assembly (10, 20).

3. The starting assembly (10, 20) according to any one of claim 1 or 2, **characterised in that** the device (14) for characterising the dispersions of the starter (12) is a passive analogue device.

4. The starting assembly (20) according to any one of claims 1 to 3, **characterised in that** the means (15) for storing a dispersion indicator is an ohmic conductor (140), and **in that** the dispersion indicator is a resistance value.

5. The starting assembly (10, 20) according to any one of claims 1 to 4, the dispersions of the starter (12) being previously estimated and/or measured, **characterised in that** the dispersion indicator is predefined in conformity with the estimated and/or measured dispersions of the starter (12).

6. The starting assembly (10) according to any one of claim 1 or 2, **characterised in that** the device (14) for characterising the dispersions of the starter (12) is a digital device.

7. An aircraft (50), **characterised in that** it comprises a starting assembly (10, 20) according to one of the preceding claims, **in that** the engine (11) is a propulsion engine of the aircraft (50) and/or an auxiliary power engine of the aircraft (50).

8. A method for starting an engine implementing a starting assembly (10, 20) comprising:
- a starter (12) intended to supply a required starting torque to the engine (11) to start the engine (11) in a starting phase, the starter (12) being subject to construction dispersions that vary the value of the torque supplied,
- an electronic starting device (13) linked to the starter (12) and intended to supply an electrical current to the starter (12) to electrically power it in the starting phase,
the starter (12) comprising a device (14) for characterising the dispersions of the starter (12) comprising a means (15) for storing a dispersion indicator,
the electronic starting device (13) comprising a means (16) for reading the dispersion indicator and being configured to read the dispersion indicator so as to determine the dispersions of the starter (12), **characterised in that** said method comprises the steps of:
• the electronic starting device (13) determining the estimated and/or measured dispersions of the starter (12), (step 202)
• storing a dispersion indicator, the dispersion indicator being predefined in conformity with the estimated and/or measured dispersions,
• adjusting the electrical current supplied to the starter (12) as a function of the determined dispersions to compensate for the dispersions of the starter (12), (step 203)
• supplying the required starting torque to the engine (11) for the starter (12) to start the engine (11), (step 204).

9. The method for starting an engine according to claim 8, implementing a starting assembly (10, 20) according to one of claims 2 to 6, **characterised in that** it comprises, beforehand, the following step performed a single time:
• predefining the dispersion indicator in conformity with the estimated and/or measured dispersions of the starter (12), (step 201).
